# EUROPEAN PATENT SPECIFICATION

(11) **EP 4 598 404 B1**
(45) Date of publication and mention of the grant of the patent: **18.02.2026**
(21) Application number: 23783405.6
(22) Date of filing: 03.10.2023
(51) Int. Cl.: A47J 31/36, A47J 31/46

(54) **BEVERAGE PREPARATION MACHINE**
GETRÄNKEZUBEREITUNGSMASCHINE
MACHINE DE PRÉPARATION DE BOISSONS

(30) Priority: 04.10.2022 EP 22199517
(43) Date of publication of application: 13.08.2025
(73) Proprietor: Société des Produits Nestlé S.A., 1800 Vevey (CH)
(72) Inventor: VUAGNIAUX, Didier, 1188 Gimel (CH); KOLLEP, Alexandre, 1095 Lutry (CH); PAILLARD, Olivier, 25370 Metabief (FR); ZÜRCHER, Reto Markus, 9100 Herisau (CH); STAUB, Andreas, 8442 Hettlingen (CH); STRAUMANN, Andreas, 8353 Elgg (CH)
(74) Representative: Pasquino, Fabio
(86) International application number: PCT/EP2023/077356
(87) International publication number: WO 2024/074509

(56) References cited:
- EP-B1- 3 334 315
- US-A1- 2017 273 501
- US-A1- 2020 121 115

## Description

### Field of the invention

The present invention relates to a machine preparing beverage from single dose containers.

### Background of the invention

WO2020089404 describes a beverage preparation machine for preparing a beverage upon interaction of ingredients provided in the capsule with liquid supplied thereto. The machine comprises an extraction device comprising a first enclosing member and a second cooperating enclosing member designed for being moved relatively to each other. The first enclosing member is equipped with capsule opening and injection means for opening a first inlet face of a capsule and inject liquid into the capsule. The first and second enclosing members are designed for being brought into at least a first capsule insertion position for inserting a capsule between the enclosing members and a second capsule enclosing position in which the opening and injection means engage the liquid inlet face of the capsule. The movement of the first and second enclosing member can be controlled by an electrical motor.

Within this type of machine, liquid injected in the capsule is supplied by a liquid supply system. Usually, this system comprises a liquid supply, a pump and a heater. Depending on the types of beverage offered by machine, this liquid supply system can comprise additional valves such as one first valve to provide either hot liquid or cold liquid and a second valve to dispense the fluid to the first enclosing member of the extraction device or directly to a drinking cup for the preparation of beverages requiring a last dilution of the extracted beverage (like Americano coffee). These two valves are usually electrically controlled valves which increase greatly the global cost of the machine.

Consequently, a fully automatised beverage machine preparing a beverage from a motorized capsule extraction device and able to provide either hot or cold liquid preparation and to dispense liquid to the extraction device is particularly expensive due to the requirement of several motors.

Another beverage preparation machine is known from US 2020/121115 A1.

An object of the invention is to address the above drawbacks and to provide a low cost machine providing all the automatic functions with one motor only.

### Summary of the invention

There is provided a beverage preparation machine for preparing a beverage from a beverage ingredient pod, said machine comprising :
- a device for extracting a beverage ingredient by supplying an extraction liquid, such as hot water, into the pod, said extraction device comprising :
   . upstream and downstream pod enclosing parts relatively movable between an open position for inserting and/or ejecting the pod and a closed position for forming an extraction chamber enclosing the pod during extraction,
   . the upstream part defining a cage and bearing :
      . an upstream piercing arrangement for opening a bottom wall of the pod, and
      . a liquid injector,
   . the downstream part comprising a downstream plane piercing arrangement for opening a lid of the pod and a beverage outlet for dispensing extracted beverage,
- a liquid supply system connected to the upstream enclosing part, said liquid supply system comprising :
   . a liquid supply,
   . pumping means to drive liquid from the liquid supply,
   . heating means to adapt the temperature of the liquid,
- a motor to actuate the movement of at least one of the upstream and downstream container enclosing parts, preferably through the translation of the upstream enclosing part to the fixed downstream enclosing part, between the opened position and the closed position, and a control system configured to control the actuation of said motor,
wherein the liquid supply system comprises :
- a cold tube to supply cold or ambient pumped water from the pumping means and a hot tube to supply pumped hot water from the heating means, said cold tube and said hot tube supplying a common connector with water,
- a first tube to supply water to the liquid injector and a second tube to supply water to an in-cup beverage dispensing area, the common connector supplying said first and said second tubes with water,
- a first peristaltic valve to enable the supply of the common connector with water either from the cold tube or from the hot tube,
- a second peristaltic valve to enable the supply of the first tube or the second tube with water dispensed through the common connector,
and wherein the machine comprises mechanical triggers attached to at least one of the movable pod enclosing parts, said triggers being designed and positioned so as to close or open water paths in the tubes and pod paths in the extraction device according to the movement of at least one of the upstream and downstream pod enclosing parts during the sequence of preparation of a beverage from the pod (identification, enclosing and piercing, injecting hot water, ejecting the pod).

The extraction device of the system is typically comprised in a beverage preparation machine configured for receiving pods. Preferably it is a coffee machine, though the machine can be designed to prepare tea, chocolate or soup for instance, depending on the ingredient enclosed in the pod. In particular, the machine is arranged for preparing within the extraction chamber a beverage by passing water or another liquid through a pod containing an ingredient of the beverage to be prepared, preferably roasted ground coffee, or eventually tea leaves or instant coffee or instant tea or chocolate or cacao or milk powder or dehydrated soup. In the preferred embodiment, the beverage ingredient is roasted and ground coffee.

The device is configured for extracting a beverage ingredient contained in a pod by supplying an extraction liquid such as water into the pod. The device comprises upstream and downstream pod enclosing parts relatively movable between an open position for inserting and/or ejecting such pod and a closed position for forming an extraction chamber enclosing the pod during beverage ingredient extraction.

Typically, the pod can be inserted into the extraction device from above under the effect of gravity. Ejection or removal of the pod upon reopening of the enclosing parts may also be driven by gravity.

The upstream and downstream pod enclosing parts are relatively movable between an open position for inserting and/or ejecting the pod and a closed position for forming an extraction chamber enclosing the pod during extraction. In the preferred embodiment. upstream and downstream pod enclosing parts are relatively translatable along a longitudinal axis (XX').

The upstream part or injecting part comprises an upstream piercing arrangement in the form of one or more piercers for piercing the bottom wall of the pod body of the inserted pod and at least one liquid injector for supplying liquid through the pierced first wall of the pod.

This upstream piercing arrangement can comprise piercers in the form of blades. These blades ca be designed and positioned to pierce the bottom wall of the pod body when the upstream and downstream pod enclosing parts are brought to the closed position. The liquid injector, such as a shower at the upstream part of the cage, can introduce the extracting liquid through the pre-pierced openings.

In an alternative, this upstream piercing arrangement can comprise at least one hollow needle configured to pierce the wall of the bottom of the pod body and the hollow needle(s) can comprise an internal axial channel for guiding the extraction liquid in the chamber of the pod.

The downstream part or dispensing part defines a downstream piercing arrangement for opening the lid wall of the pod when the extracting liquid is introduced inside the pod. Usually, this downstream plane piercing arrangement is designed for opening the lid by relative engagement with said lid under the effect of the rise in pressure of the injected liquid in the chamber of the pod and inflation of the lid against the piercing arrangement. In the preferred embodiment, this downstream plane piercing arrangement comprises a plate, that is preferably rigid, and that comprises opening elements like a plurality of relief and recessed elements such as spikes, that can present the shape of cones or pyramids on its surface turned to the second wall.

In addition, the plate comprises traversing holes to evacuate the beverage dispensed from the opened lid to a tube or nozzle collecting and dispensing beverage in a drinking cup.

Usually, the shapes of the upstream and enclosing parts of the extraction device are defined according to the shape of the pod configured to be extracted therefrom.

Generally, the extracting device can comprise an insertion section for inserting the pod in the device. Generally, this section is positioned above the upstream and downstream pod enclosing parts so that the pod is inserted by gravity between these two parts. Depending on the shape of the pod, this insertion section can be designed so that the user is urged to position the pod with its lid facing the downstream piercing arrangement.

This beverage machine comprises a liquid supply system connected to the upstream enclosing part. This liquid supply system can comprise :
- a liquid supply such as a liquid tank that usually stores liquid at ambient, also identified as cold by opposition to hot, temperature,
- pumping means to drive liquid from the liquid supply to the extraction device,
- heating means to adapt the temperature of the liquid before it is introduced inside the pod if desired.

The liquid is usually water.

In one particular embodiment, the machine can comprise additional cooling means to cool down the temperature of the liquid.

The machine comprises a motor to actuate the movement of at least one of the upstream and downstream container enclosing parts. It is preferably an electrical motor. The motor is usually connected to at least one of the pod enclosing parts by an intermediate actuator, such as a knee lever. Connection usually comprises a gear mechanism between the shaft of the motor and the intermediate actuator.

The machine comprises a control system configured to control the actuation of the motor and accordingly the relative positions of the upstream and downstream pod enclosing parts during a beverage preparation.

Usually, this control system is configured to control the pump and the heater of liquid supply system too.

In addition, the liquid supply system of the machine comprises a first peristaltic valve to enable the supply of either hot pumped water from the heater or cold pumped water from the pump (or from a cooling means if the machine is provided with). The outlet of the heater is connected with a hot tube that is flexible and the outlet of the pump is connected with a cold tube that is flexible too. Both cold and hot tubes are connected to a common connector provided with two fluid inlets and two fluid outlets. At its downstream side, this connector is configured to dispense pumped liquid to the extraction device or to an in-cup beverage dispensing area of the machine.

Both tubes are able to be pinched or released by the first peristaltic valve to enable the supply of the common connector with water either from the cold tube or from the hot tube.

In one preferred embodiment, by default (that is when this valve is in its rest position), this peristaltic valve is configured to release the hot tube (meaning to not pinch the hot tube) and to pinch the cold tube. Accordingly, there is less risk that the properties of the material of the flexible tube are impacted by heating and hat this tube is hardly openable when not pinched any longer.

In addition, the liquid supply system of the machine comprises a second peristaltic valve to enable the supply liquid flowing through the connector either to the extraction device or to the dispensing area of the machine.

One outlet of the connector is connected to the liquid injector of the upstream pod enclosing part by a first flexible tube and the other outlet of the connector is connected to in-cup beverage dispensing area by a second flexible tube.

Both tubes are able to be pinched or released by the second peristaltic valve to enable the supply of liquid flowing in the common connector to the first or to the second tube.

In one preferred embodiment, by default (that is when this valve is in its rest position) this peristaltic valve is configured to half-pinch the first and the second tubes. The effect of this half-pinching valve is the same as a check valve which opens when the liquid reaches a certain threshold pressure (e.g. above 1 bar) ; no liquid flows through the half-pinched tubes since the pump is actuated only when one of the tube is not pinched any longer.

The use of two peristaltic valves decreases the costs of manufacturing and use of the machine compared to electrically actuated valves, like solenoid valves.

The machine comprises mechanical triggers to actuate the peristaltic valves and to control the movement of the pod relatively to the two enclosing parts.

The triggers for the peristaltic valves are attached to at least one of the movable pod enclosing parts so that the movement of the corresponding enclosing part drives the movement of the trigger simultaneously. Preferably, the triggers are attached in a fixed manner to the enclosing part.

The triggers for the pod are designed and positioned to close or open paths for the pod depending on the position of the movable pod enclosing parts. These paths are essentially paths to and out of the extraction chamber.

The different triggers are also designed and positioned to close or open water paths in the tubes and pod paths according to the sequence of a beverage preparation. Generally, this sequence of beverage preparation comprises at least the following steps (in particular for the preparation of hot coffee) :
- insertion of the pod between the enclosing parts,
- enclosing and piercing of the pod,
- injection of hot liquid, alternatively of cold liquid,
- ejection of the pod.

At least one of the following additional steps can be implemented depending on the machine functionalities :
- recognition of the pod before insertion,
- introduction of hot or cold water in the beverage dispensed from the extracted pod.

The position of the triggers relatively to the movable pod enclosing part(s) and the controlled position of the movable enclosing part(s) during the beverage preparation enable the coordination of the opening and closure of the paths to get the required sequence.

In the preferred embodiment,
- the downstream pod enclosing part is fixed, and
- the upstream pod enclosing part is translatable along a longitudinal axis (XX') between a fully opened position and a closed position, and
- the control system of the motor is configured to position the upstream pod enclosing part in at least one intermediate position between the fully open position and the closed position.

The translation of only one of the two enclosing parts provides a simple architecture of the extraction device and reduces manufacturing costs too.

With this architecture, the upstream pod enclosing part can be translated and positioned at different positions comprising :
- the closed position wherein the two enclosing parts form the extraction chamber,
- the fully opened position wherein the upstream pod enclosing part is at the farthest position from the downstream enclosing part,
- intermediate positions between these two precedent positions to enable the triggers to open or close liquid paths and pod paths.

The machine can comprise a pod trigger attached to the upstream pod enclosing part, said pod trigger being designed and positioned relatively to first and second enclosing parts :
- to receive and hold a pod above the pod enclosing parts when the upstream pod enclosing part is positioned in a pod holding intermediate position, and
- to release the pod when the upstream pod enclosing part is moved to the fully opened position.

In one embodiment, the machine can comprise a recognition device configured to recognise a pod by contact of said recognition device with a surface of the pod, and the machine can comprise a trigger for recognition, said trigger being attached to the upstream pod enclosing part and being designed and positioned to push the pod to the recognition device when the upstream pod enclosing part is positioned in a pod recognition intermediate position.

Usually, the machine comprises a pod holder, said pod holder being attached to the downstream pod enclosing part and said pod holder being movable between :
. a receiving position for receiving and holding a pod in front of the downstream plane piercing arrangement when the pod is inserted, and
. a retracted position at the lateral sides of the downstream plane piercing arrangement, when the pod is ejected, and
wherein said machine comprises a trigger for the pod holder, said trigger for the pod holder being attached to the upstream pod enclosing part and being designed and positioned to release the pod holder from the retracted position to the receiving position when the upstream pod enclosing part is positioned in a pod holder release intermediate position.

In one preferred embodiment, the trigger for the pod holder and the trigger for the pod can be formed in the same piece of material. This piece of material is designed to enable the two functions. This piece of material can comprise at least two protrusions extending longitudinally from the downstream side of the upstream enclosing part. Depending on the position of the upstream enclosing part, these protrusions:
- can provide a support for the pod in the pod holding intermediate position of the upstream enclosing part, or
- can enable the release of the pod holder in the pod holder release intermediate position of the upstream enclosing part.

Preferably, the machine comprises a trigger for the second peristaltic valve, said trigger being attached to the upstream pod enclosing part and said trigger being designed and positioned relatively to the upstream pod enclosing part and to the second peristaltic valve :
- to open the first tube in order to supply water to the liquid injector when the upstream pod enclosing part is positioned in the closed position,
- to open the second tube to supply water to the in-cup beverage dispensing area when the upstream pod enclosing part is positioned in an americano intermediate position.

Preferably, in the other intermediate positions of the upstream pod enclosing part, the trigger is configured to close the first and the second tubes.

In the preferred embodiment, this trigger for the second peristaltic valve can be a cam member attached to the upstream enclosing part with a profile having a plurality of protrusions and/or cavities which are arranged to move the pinching element of the second peristaltic valve in order to pinch at least one of the first and second tubes or to release one of the first or second tube.

Preferably, the trigger for the second peristaltic valve is designed so as to open the first tube to supply water to the liquid injector while the upstream pod enclosing part is being moved from the pod holding position to a downstream position.

This design of the trigger enables rapid opening and subsequent pinching of the first tube during to the continuous movement of the upstream pod enclosing part. As a result, any overpressure in the fluid system, due to long heating inside the heating means, enables evacuation of a little amount of liquid in the extraction cage. In order to not send this little amount of liquid to the pod, this step is set to happen before the pod is introduced between the two enclosing parts.

Preferably, the first peristaltic valve of the machine comprises an actuator movable between at least two positions, wherein, in one cold position of said actuator, water is supplied from the cold tube, and in another hot position of said actuator, water is supplied from the hot tube. This peristaltic valve can be the valve described in WO 2008/138820.

With this first peristaltic valve, the machine comprises a trigger for the actuator of the first peristaltic valve, said trigger being attached to the upstream pod enclosing part and said trigger being designed and positioned relatively to the second enclosing part and to the actuator :
- to move said actuator to the hot position when the upstream pod enclosing part is moving downstream from the fully opened position,
- to move said actuator to its cold position when the upstream pod enclosing part is moving upstream from the home position to the fully opened position.

In the preferred embodiment,
- the upstream pod enclosing part is driven by the motor, preferably by way of a gear mechanism, and
- the machine comprises a rotary encoder cooperating with the shaft of the motor, and
- the control system controls the motor dependent on the signals provided by the rotary encoder.

With this preferred embodiment, the rotary encoder can be initialized when the upstream enclosing part reaches the fully opened position. This fully opened position can be detected by measure of the current of the motor. Actually, at that position, the current of the motor increases strongly as the upstream enclosing part can be made unable to bypass this position.

In the present application :
- the term "pod" is used to broadly designate any kind of single-dose container suitable for preparing beverages or other edible products such as capsule, cartridge, portioned or individual package without limitation to the shape of this container, in particular the shape of the body, or the types of piercing means needed to extract the beverage therefrom.
- the term "peristaltic" valve is equivalent to "pinching" valve that is a valve configured to pinch or release flexible hoses or tubes.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

Specific embodiments of the invention are now described further, by way of example, with reference to the following drawings in which :
- Figures 1A and 1B are side and top views of an extraction device in the opened position and of a part of the fluid system of a beverage preparation machine according to the invention,
- Figures 2A and 2B are side and top views of an extraction device in the closed position and a part of the fluid system of a beverage preparation machine according to the invention,
- Figure 3 is a schematic view of the fluid system of the beverage preparation machine and its cooperation with the triggers moved by the extraction device,
- Figures 4A and 4B are top and front views of the trigger for the second peristaltic valve,
- Figures 5A and 5B are top and perspective views of the trigger for the first peristaltic valve,
- Figures 6A and 6B are isolated side views of the upstream and downstream pod enclosing parts 1, 2 of the extraction device of Figures 1A, 2A,
- Figures 7A and 7B are isolated perspective view of the downstream pod enclosing part 2 of Figures 6A and 6B respectively,
- Figure 7C is an isolated view of the downstream plate piercing arrangement and its peripheral area of Figures 7A and 7B,
- Figure 8 is an isolated perspective view of the upstream pod enclosing part 2 of Figures 6A-6B,
- Figure 9 illustrates a pod 3 that can be used in the beverage preparation machine of the invention,
- Figure 10 illustrates the different positions of the upstream enclosing part 2 during the extraction of a hot beverage with the illustrated beverage machine,
- Figure 11 illustrates the different positions of the upstream enclosing part 2 during the extraction of a cold beverage with the illustrated beverage machine,
- Figure 12 is a view of the encoder of the machine.

### Detailed description of exemplary embodiments

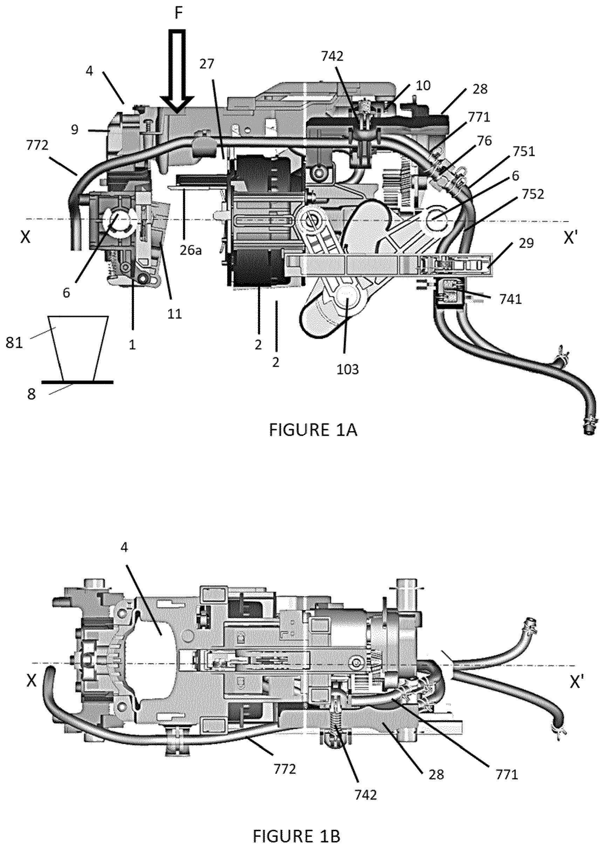

**Figures 1A and 1B** are side and top views of an extraction device and a part of the fluid system of a beverage preparation machine according to the invention. The extraction device comprises an upstream pod enclosing part 2 and a downstream pod enclosing part 1 relatively translatable along a longitudinal axis XX'. Preferably, this axis XX' is essentially horizontal. In

Figures 1A-1B, these pod enclosing parts 1, 2 are positioned in the fully opened position of the extraction device, where the enclosing parts are at a position that is the most distant from each other.

A pod can be introduced through an insertion section 4 positioned above the two enclosing parts 1, 2, from which it can fall by gravity inside a pod holder between these two enclosing parts 1, 2. After extraction, the pod can fall by gravity again below these two enclosing parts 1, 2 when they move apart one from the other. The arrow F illustrates the movement of the pod from the insertion inside the extraction device.

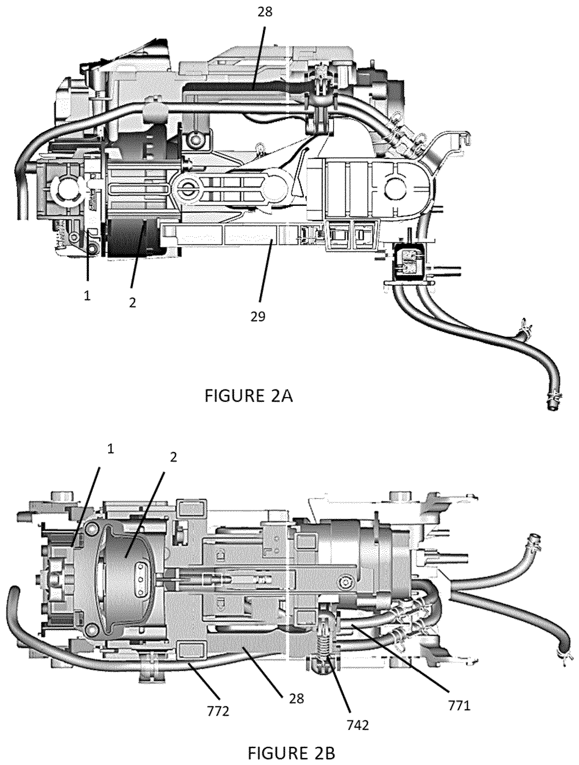

The two pod enclosing parts 1, 2 are hold and movable between two lateral and longitudinal sheets (not illustrated) and between two transversal axis 6. At least one of these parts is movable in translation between these two sheets and these two axis in order to assess different relative and functional positions. In the preferred illustrated embodiments, the downstream enclosing part 1 is fixed and only the upstream enclosing part 2 is movable back and forth along the longitudinal axis XX' between this fully opened position of Figures 1A and 1B and the closed position illustrated in **Figures 2A and 2B****.** In Figure 2A and 2B, these two parts are in a closed position and form an extraction chamber configured to enclose a pod during extraction.

The upstream enclosing parts is moved by an actuator 103 comprising a knee lever cooperating at one end with the upstream enclosing part and at the other end with one of the transversal axis 6. This knee lever is actuated by a motor 10 through a gear mechanism (not visible).

Preferably, the insertion section 4 can comprise a recognition device 9 to recognise or identify the pod that is introduced inside the extraction device. The recognition device can comprise :
- means to block temporary to block the pod in a recognition position, and
- a recognition device to recognise the pod blocked in this temporary recognition position, such as a camera.

The control system can be configured to enable the blocking means to let the pod fall to the pod holder of the extraction device once the pod has been recognised.

Figures 1A, 1B, 2A, 2B shows flexible tubes that are part of the liquid supply system of the machine :
- a cold tube 752 supplies a connector 76 with cold pumped water,
- a hot tube 751 supplies this same connector 76 with pumped hot water.
- a first tube 771 supplies water from the connector 76 to the upstream enclosing part 2,
- a second tube 772 supplies water from the connector to a cup 81 at an in-cup beverage dispensing area 8 (Figure 1A).

The passage of water through these tubes is controlled by two peristaltic valves position in series at the upstream and downstream side of the connector 76.

The first peristaltic valve 741 enables the supply of the common connector 76 with water either from the cold tube 752 or from the hot tube 751.

The second peristaltic valve 742 enables the supply of the first tube 771 or the second tube 772 with water dispensed through the common connector 76.

The peristaltic valves comprise pinching devices configured, for each tube, to pinch or to release the flexible tube depending on the position of said pinching device. In the pinching position, liquid is prevented from flowing and in the release position, liquid can flow if pumped. Mechanical triggers are attached to the movable upstream pod enclosing part 2 and are configured to move with this part 2 during the beverage preparation.

Some triggers 28, 29 are configured to control the position of the pinching devices of the peristaltic valves and to enable the direction of either hot or cold water to the upstream enclosing part or to the dispensing area.

Other triggers 26a, 27 are configured to control the movement of the pod from a stand-by position above the extraction device, to a recognition position and to an extraction position.

These different triggers are designed and positioned to obtain these effects through the movement of the upstream pod enclosing parts during the sequence of preparation of a beverage from the pod. In this illustrated embodiment, this sequence comprises a recognition operation, a pod loading operation, an extraction position, that can include a piercing operation and a water injection operation, and an ejection operation.

Depending on the configuration of the beverage machine, the machine can be simpler and some operations may not be implemented, like the recognition operation. Or the machine can be even more complex and additional operations may be implemented, like a cleaning sequence, a descaling sequence for the different tubes or a combination of preparation of different beverages. For example, the machine can comprise a module to prepare a milk component (such a dissolution of milk with hot or cold water, or frothing of milk with hot water) and the control system of the machine can be configure to dispense hot or cold water through the second tube supplying water to this milk module.

In Figures 2A, 2B corresponding to the extraction operation, it can be observed that the triggers 28, 29 present a different position relatively to the peristaltic valves 741, 742 compared to the pod loading operation illustrated in Figures 1A, 1B.

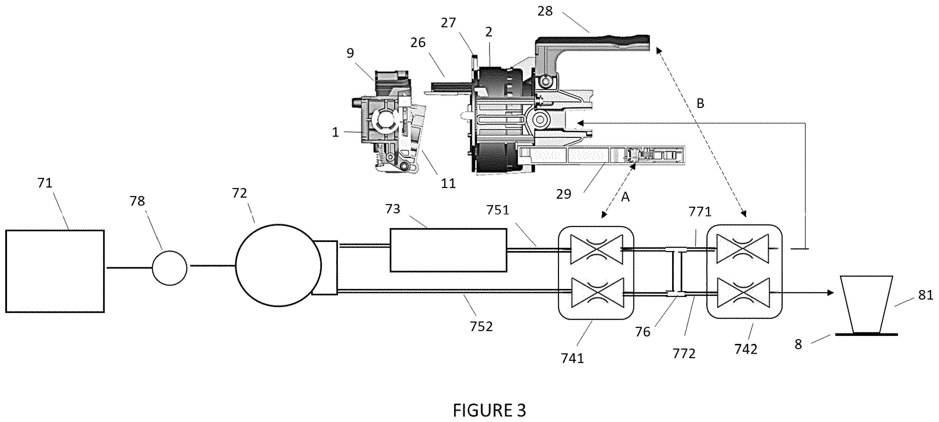

**Figure 3** illustrated the cooperation between the fluid system of the beverage preparation machine and the triggers moved by the extraction device.

This fluid system usually comprises a tank 71 of fluid, generally water, a pump 72 to pump that fluid form the tank. The outlet of the pump is connected to two tubes :
- one is connected a device to adapt the temperature of the fluid, preferably a heater 32,
- the other by passes this device and supplies fluid at cold or ambient temperature.

The tube 751 supplying hot water and the tube 752 supplying cold water are flexible and cooperate with a common pinching valve 741. By default, this valve is configured to pinch both tubes and to prevent liquid from leaking. This valve can be moved to two different positions :
in one position, the valve releases the hot tube, and in the other position, this valve releases the cold tube. WO 2008/138820 describes this type of valve. This valve 741 is moved in the different positions by the trigger 29 during the movement of the second pod enclosing part 2 as illustrated by the arrow A.

Downstream the first valve 741, the two flexible tubes supply liquid to a common connector 76. This connector 76 supplies the liquid dispensed by the first valve 741 to two flexible tubes 771, 772. The first tube 771 is connected to the liquid injector of the upstream pod enclosing part 2 and the second tube 772 dispenses liquid at the dispensing area 8 of the machine in order to provide either got or cold water in the drinking cup to dilute the beverage prepared in the extraction device and dispensed in the cup.

The tube 771 and the tube 752 are flexible and cooperate with a common pinching valve 742. By default, this valve is configured to pinch both tubes and to prevent liquid from leaking. This valve can be moved to two different positions : in one position, the valve releases the first tube, and in the other position, this valve releases the second tube. This valve 742 is moved in the different positions by the trigger 28 during the movement of the second pod enclosing part 2 as illustrated by the arrow B.

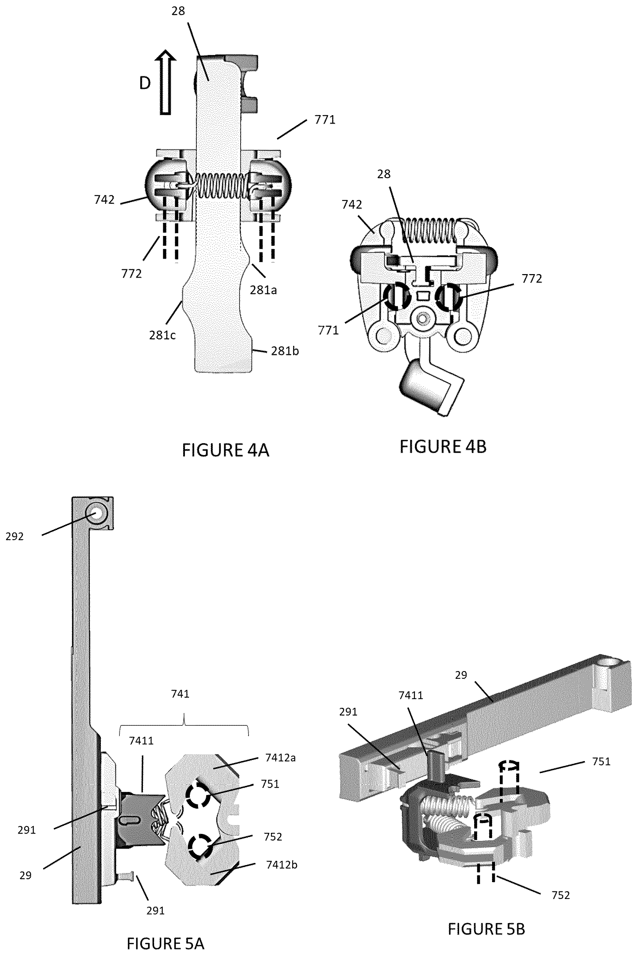

**Figures 4A, 4B** are isolated views of the second valve 742 and the trigger 28 for this second valve.

An end part of this trigger is attached to the movable pod enclosing part 2 in a fixed manner, for example to the chassis of said movable pod enclosing part 2. Accordingly, this trigger 28 moves and follows the same movement as this pod enclosing part 2 that is to say a back and forth translation in the illustrated embodiment. This trigger 28 is a cam member presenting a profile configured to interact with the second peristaltic valve 742 which is fixedly attached to the chassis of the extraction device or another part the machine which is fixed.

The second peristaltic valve 742 comprises two pinching elements each of them being configured to pinch one corresponding tube : the tube 771 to the pod or the tube 772. Both pinching elements are spring loaded. The cam member of the trigger cooperates with the valve in order to release the pressure exerted by the spring on one or the other tube.

As mentioned above, by default (that is when this valve is in its rest position) this peristaltic valve can be configured to half-pinch the first and the second tubes. The effect of this half-pinching valve is the same as a check valve which opens when the liquid reaches a certain threshold pressure (e.g. above 1 bar) ; no liquid flows through the half-pinched tubes since the pump is actuated only when one of the tube is not pinched any longer.

In the specific valve 742 of the illustrated embodiment, the cam member comprises :
- two protrusions 281a and 281b to release the tube 771 to the pod at two different positions of the upstream enclosing part 2, and
- one protrusion 281c to release the tube 772 to the dispensing area at a third different position of the upstream enclosing part 2.

Figure 4A shows the relative position of the cam member 28 and the second peristaltic valve 742 when the upstream enclosing part 2 is in the fully opened position (see Fig. 1A, 1B) and where both tubes 771, 772 are half-pinched.

When the upstream enclosing part 2 is moved from this fully opened position to the closed position illustrated in Fig. 2A, 2B, the cam member is translated according to arrow D relatively to the fixed second valve 742. During this movement, the cam member can open the tubes in three particular positions :
- firstly, the protrusion 281a is configured to release the first tube 771 to pod by moving apart the pinching element of said first tube, then
- in a so-called "americano" position, the protrusion 281c is configured to release the second tube 772 to dispensing area by moving apart the pinching element of said second tube, then
- in the closed position, the protrusion 281b is configured to release the first tube 771 to pod by moving apart the pinching element of said first tube.

Usually, when a beverage is prepared from a pod, the movement of the upstream enclosing part 2 is configured to comprise a translation from the fully opened position to the closed position without any stop between these two positions. Accordingly, during this movement, the cam member opens briefly the first tube 771 to the pod while it passes along the valve : this short opening enables the evacuation of any overpressure that would have risen inside the heater before a beverage is prepared. This short overpressure produces some liquid that can be evacuated through the cage of the upstream enclosing part. As this upstream enclosing part 2 is in a position where the extraction is not yet closed and does not yet hold the pod, this liquid can be evacuated below the chamber and collected in a bin provided for the reception of ejected pods.

On the contrary, in the closed position and the "Americano" position, the upstream enclosing part 2 is configured to stop and hold the position sufficiently longer to enable the opening of the first tube 771 and the second tube 772 respectively. Then, water can be injected in the pod for the extraction or dispensed at the dispensing area.

**Figures 5A, 5B** are isolated views of the first valve 741 and the trigger 29 for this second valve. An end part 292 of this trigger is attached to the movable pod enclosing part 2 in a fixed manner, for example to the chassis of said movable pod enclosing part 2. Accordingly, this trigger 29 moves and follows the same movement as this pod enclosing part 2 that is to say a translation in upstream direction or downstream direction in the illustrated embodiment.

This trigger 29 supports a pin 291 configured to interact with an actuator 7411 of the first peristaltic valve. This actuator 7411 cooperates with the pinching elements 7412a and 7412b of the valve which pinch the hot tube 751 and the cold tube 752 respectively. This actuator is configured to position these pinching elements 7412a, 7412b in three different positions :
- a position where only the cold tube 752 is pinched by the pinching elements 7412b, while the other pinching element 7412a releases the hot tube 751 further to the position of the actuator 7411 in the hot position during the movement of the trigger 29,
- a position where only the hot tube 751 is pinched by the pinching elements 7412a, while the other pinching element 7412b releases the cold tube 752 further to the position of the actuator 7411 in the cold position during the movement of the trigger 29,
- optionally a neutral position, where both tubes are pinched and corresponding to the illustration of Figures 5A, 5B.

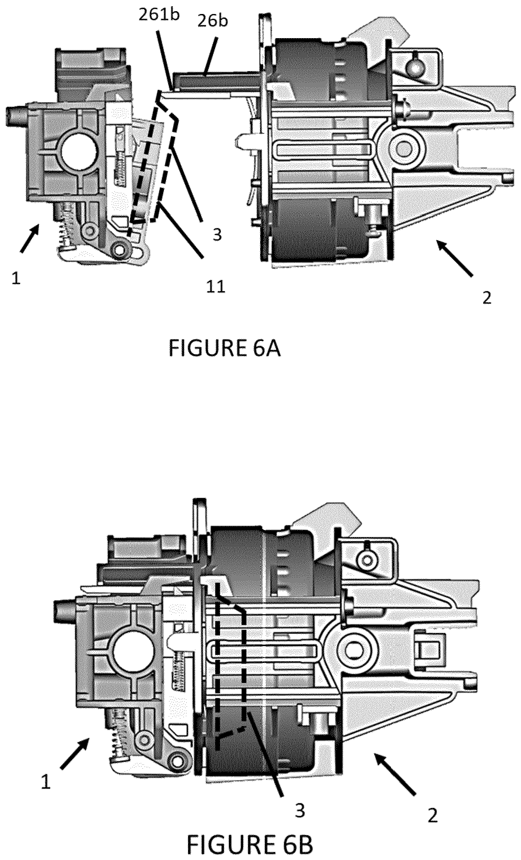

**Figures 6A and 6B** are isolated side views of the upstream and downstream pod enclosing parts 1, 2 of the extraction device of Figures 1A, 2A in the different relative and functional positions. The position of the pod 3 is schematically illustrated in dotted lines.

In **Figure 6A****,** the upstream and downstream pod enclosing parts 1, 2 are positioned in the open position for inserting a pod from the upper side. A pod holder 11 is visible in front of the downstream pod enclosing part 1 in a receiving position for receiving and holding the pod 3 as further described below in relation with Figure 4A.

In **Figure 6B****,** the upstream and downstream pod enclosing parts 1, 2 are positioned in the closed position and form an extraction chamber enclosing a pod during extraction. In that position, the pod holder 11 is in a retracted position.

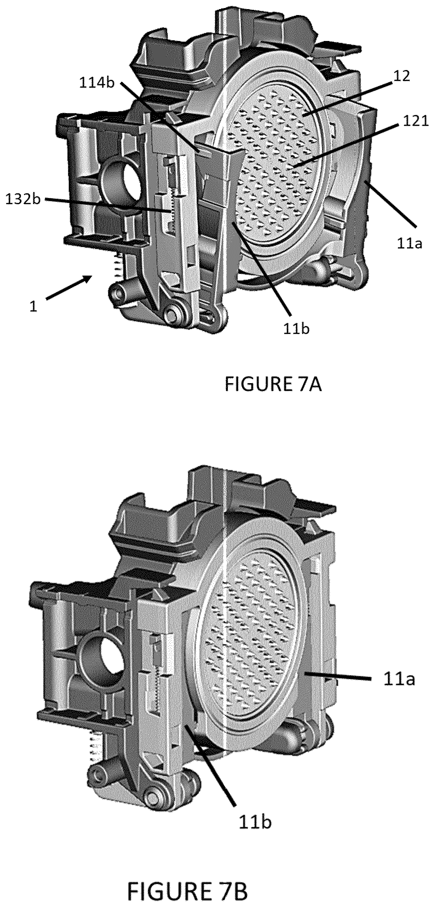

**Figure 7A** is an isolated perspective view of the downstream pod enclosing part 2 of Figure 6A. The downstream part 1 defines a plate perpendicular (that is transverse) to the longitudinal axis XX'. This plate comprises a central downstream plane piercing arrangement 12 for opening the lid 32 of the pod when the extracting liquid is introduced inside the pod and inflates the lid. Opening happens by relative engagement of spikes with the lid under the effect of the rise in pressure of the injected liquid in the pod body chamber. This downstream plane piercing arrangement may comprise a rigid plate comprising opening elements 121 such as spikes, that can present the shape of cones or pyramids, optionally truncated at their ends, on its surface turned to the lid. In addition, the plate comprises traversing holes to evacuate the beverage dispensed from the opened lid to a tube or nozzle collecting and dispensing beverage to a drinking cup.

The downstream part 1 comprises a pod holder 11 that is attached to the peripheral area. While being attached, the pod holder can be moved between two positions. In Figure 7A, the pod holder 11 is in the first position for receiving and holding the lid of the pod in front of the downstream plane piercing arrangement.

The pod holder 11 comprises a pair of arms 11a, 11b that retain and position the pod when this pair is in the first receiving position such as illustrated in Figure 7A. In this position of the pod holder, these arms retain vertically the pod, that is they stop the vertical fall of the pod falling from the insertion position.

The pair of retaining elements 11a, 11b are movable from the receiving position to a second retracted position at the lateral sides of the downstream plane piercing arrangement as illustrated in **Figure 7B** that is an isolated perspective view of the downstream pod enclosing part 2 of Figure 6B. In this situation, the pair of retaining and positioning elements 11a, 11b were pushed from the receiving position to the retracted position by the upstream enclosing part 2 when said upstream enclosing part was being translated longitudinally from the fully opened position to the closed position.

Preferably, each of the arms 11a, 11b of the pod holder can be locked in the retracted position during the extraction of the pod and during the ejection of the pod so as to prevent any malfunction during ejection.

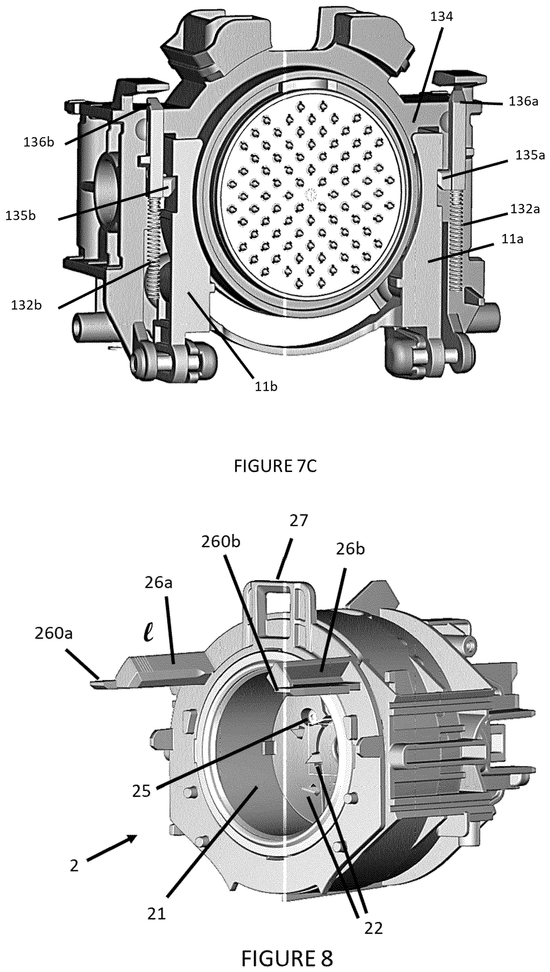

**Figure 7C** illustrates the way the lockers 135a, 135b of the arm 11a, 11b can be configured. In this illustration a part of the downstream pod enclosing part that holds the lockers was made transparent. It is made apparent that the arm 11a is locked by the locker 135a that is a spring loaded bolt (spring 132a) ; the locker can be moved downwardly by the arm 11b during the movement of said arm to the retracted position and it can cooperate with a locking surface of the arm (not illustrated) afterwards so that the retaining and positioning element is not free to move back to the upstream direction as illustrated in Figure 7C.

In this particular embodiment, this locker 135a is designed so as to extend up to the upper side of the peripheral area 134 and so as to form a pin 136b that rises upwardly at this upper side. By exerting a pressure on this pin against the force of the spring, the locker 135a can be displaced downwardly and stop locking the arm 11a that is released. The other arm 11b is locked in a similar manner.

Each of the pins 136a, 136b presents an inclined surface so that, when the upstream pod enclosing part 2 is moved to the downstream enclosing part 1, this surface can cooperate with a part of said upstream pod enclosing part 2 so that this pin is pushed downwardly, enabling the movement of the pod catcher from the retracted position to the release position. This part of the upstream pod enclosing part 2 is designed to be sufficiently thin to slide in the little spaces defined above the pins 136a, 136b.

**Figure 8** is an isolated perspective view of the upstream pod enclosing part 2 of Figures 6A-6B.

The upstream part defines an empty cage or cavity 21 for enclosing the pod body.

The upstream wall of the cage bears an upstream piercing arrangement 22 for opening the bottom wall 313 of the pod body. The upstream wall comprises at least one liquid injector 25 for supplying liquid into the pod through the holes opened in the bottom wall of the pod.

This upstream piercing arrangement can comprise piercers in the form of blades. These blades cam be designed and positioned to pierce the wall of the bottom of the pod body when the upstream and downstream pod enclosing parts are brought to the closed position as in Figure 6B. The liquid injector 25, such as a shower at the upstream wall of the cage, can introduce the extracting liquid inside the closed chamber and inside the pod through the pre-pierced openings.

Preferably, pods 2 of different sizes can be introduced and extracted and the bottom of the cage 21 can be made movable to adapt the cage internal volume to the pod, for example as described in WO 2020/089404.

In addition, this upstream enclosing part 2 holds several mechanical triggers with different functions.

The upstream enclosing part 2 comprises two longitudinal protrusions 26a, 26b extending at the downstream face of the upstream pod enclosing part. These protrusions are pod triggers configured :
- to receive and hold a pod above the pod enclosing parts when the upstream pod enclosing part 2 is positioned in a pod holding or home intermediate position. In this intermediate position, the pod is positioned inside the machine but can still be removed by the user before it is introduced between the two pod enclosing parts.
   and
- to release the pod from its intermediate position to the pod catcher when the upstream pod enclosing part 2 is moved to the fully opened position.

The design of these protrusions (in particular their longitudinal lengths ℓ) and their position at the downstream side of the upstream enclosing part can be set by taking into account the dimension of the pods and the length of the movement of the upstream enclosing part.

In addition, the upstream enclosing part 2 comprises another trigger 27 for recognition. This trigger 27 is designed and positioned to push the pod 2 to the recognition device 9 when a pod is present at the pod holding or home intermediate position and the upstream pod enclosing part 2 is moving to the pod recognition intermediate position that is upstream to the home intermediate position.

In addition, the upstream enclosing part 2 comprises other triggers 260a, 260b for the release of the pod holder 11. These triggers for the pod holder are designed and positioned to release the pod holder 11 from its retracted position to its receiving position when the upstream pod enclosing part is moved to a pod holder release intermediate position. They are positioned at the end of the pod triggers 26a, 26b.

The illustrated pod holder triggers 260a, 260b are particularly designed for the release the arms 11a, 11b of the pod holder by pushing the lockers 136a, 136b described in Figure 7C. In this operation, the upstream enclosing part 2 is moved to an intermediate pod holder release position between the open and closed positions of Figures 3A and 3B. In this position, the longitudinal protrusions 260a, 260b are able to slide in the spaces above the the spring loaded pins 136a, 136b (Figure 7C) and to push them downwardly so that they release the pod holder 11.

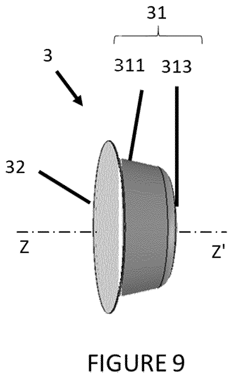

**Figure 9** illustrates a pod 3 that can be used in the beverage preparation machine of the invention.

The pod 3 comprises a pod body 31 with one sidewall 311 that extends axially from a bottom wall 313 towards a top. The sidewall 311 extends towards a top opening. At the top opening 312, the body comprises a circumferential annular flange 314 that extends radially outward from the sidewall 311 along the circumference of the opening.

The flange comprises a top surface facing the top and a bottom surface.

Generally, any transversal cross section of the body is circular from the bottom to the top and the flange is circular too.

The body delimits a chamber for containing a beverage ingredient.

This beverage ingredient packed is preferably an ingredient able to be extracted like roast and ground coffee.

In a less preferred manner, the beverage ingredient can be tea leaves or a water soluble powder ingredient such as : instant coffee powder, milk powder, cream powder, instant tea powder, cocoa powder, soup powder, fruit powder or mixture of said powders, or even a soluble liquid ingredient or a beverage concentrate such as a syrup or milk concentrate. The powders can be agglomerated or sintered.

The capsule comprises a lid 32 that is fixed, sealed or attached to at least a part of the top surface of the circumferential flange and accordingly covers and closes the top opening 312. The bottom wall 313 is adapted to be pierced so that liquid can be injected in the pod through the pierced openings.

The lid 32 is adapted to be opened by relative engagement with a piercing arrangement under the effect of the liquid pressure increase inside the pod during injection of liquid.

The pod shape is symmetric relatively to the central axial axis ZZ' extending from the bottom wall to the lid and the pod shape is asymmetrical relatively to the plane of the lid and the flange.

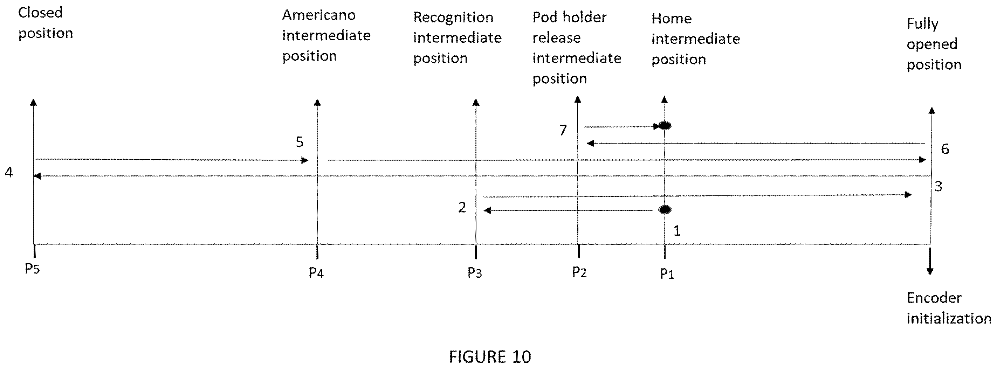

**Figure 10** illustrates the movement of the upstream enclosing part 2 during the extraction of a hot beverage from a pod with the above illustrated beverage machine. This movement is the result of the actuation of the motor by the control system of the machine.

At rest, the upstream enclosing part 2 is positioned in the home intermediate position. When a hot beverage is prepared, the following steps occur :
- the user introduced a pod inside the machine at step 1 : the triggers 26a, 26b block the pod above the upstream enclosing part. Then, the user initiates the beverage preparation through a user interface of the machine.
- the motor drives the upstream enclosing part 2 to the recognition intermediate position. The trigger 27 pushes the pod to the recognition device to enable recognition. At step 2, the pod is recognised and the recipe of preparation is read by the control system.
- the motor drives the upstream enclosing part 2 to the fully opened position where the pod triggers 26a, 26b do not support the pod any longer. The pod falls in the pod holder at step 3.
- the motor drives the upstream enclosing part 2 to the closed position. During this movement
   . the trigger 29 moves the actuator of the first peristaltic valve to its hot position,
   . by passing protrusion 281a over the second peristaltic valve, the trigger 28 evacuates overpressure from the heater, if there is an existing overpressure,

Once the closed position is reached, the protrusion 281a is positioned over the second peristaltic valve and the first tube 771 is opened to enable the supply of hot water to the liquid injector 25. At his step 4, extraction of the pod can occur.
- at the end of the extraction, the motor drives the upstream enclosing part 2 to the fully opened position. The extracted pod is ejected during this movement to step 6.

If the recipe is an americano coffee, the motor stops one moment the upstream enclosing part 2 at the americano intermediate position where the protrusion 281c is positioned over the second peristaltic valve and the second tube 772 is opened to enable the supply of hot water to the cup 81.
- at this step 6, with the pod holder described in Figures 7A-7C, this pod holder is still at the retracted position on the lateral sides of the downstream enclosing part and needs to be released. The motor drives the upstream enclosing part 2 to the pod holder release intermediate position so that the triggers 260a, 260b release the lockers 136a, 136b at step 7 and then immediately moves back the upstream enclosing part 2 to the home position.

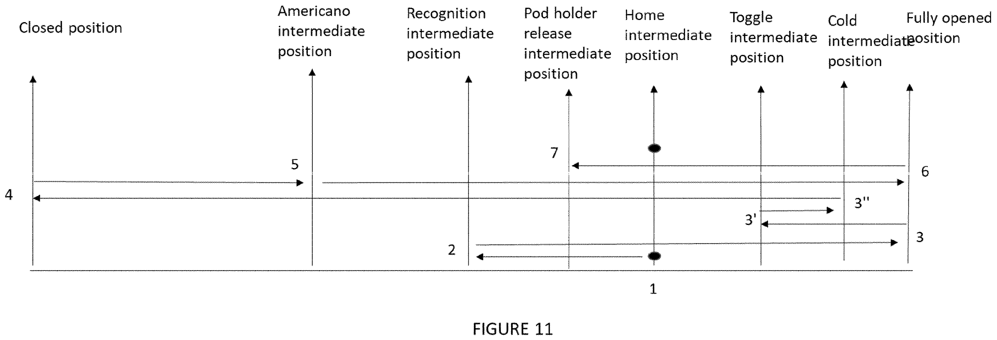

If cold or ambient water is needed to extract the beverage from the pod, then the motor includes additional steps 3' and 3 " in order to move the actuator 7411 of the first peristaltic to the cold position as illustrated in **Figure 11****.**

Since in the particular illustrated embodiment, this actuator 7411 is configured to be switched from hot position to cold position through a displacement of the trigger 29 to the upstream, it requires that the upstream pod enclosing part 2 moves downstream to an intermediate position called toggle intermediate position before moving upstream to a cold intermediate position. At the toggle intermediate position, the actuator 7411 of the valve is positioned in a neutral position enabling its movement either to the cold position or to the hot position depending on whether the movement of the trigger 29 is upstream or downstream.

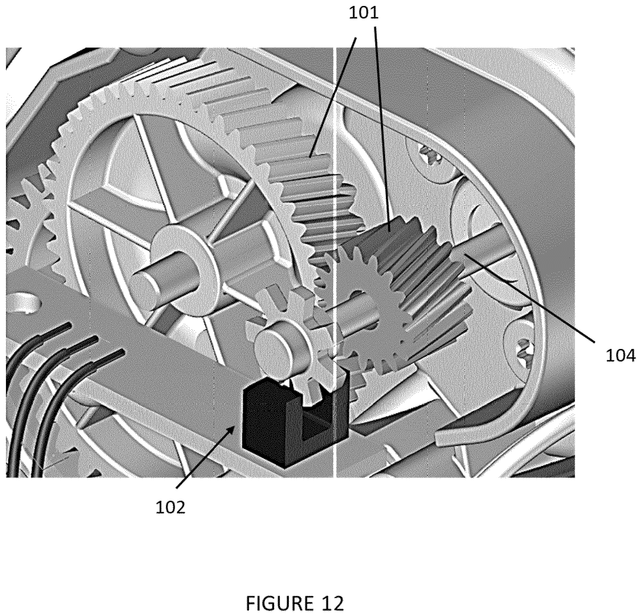

During these preparations, the movement of the upstream enclosing part is actuated by the motor and the gear mechanism which links them together. The machine comprises a rotary encoder 102 positioned close to the shaft 104 of the motor and the control system controls the motor dependent on the signals of the rotary encoder as illustrated in **Figure 12****.** The rotary encoder can be a slotted disc attached to the end of the drive shaft of the electric motor. It is connected to the control system to input the system with the number of pulses provided by the encoder.

In order to enable the control system to initialize the rotary encoder at a defined position, the fully opened position is set as this defined position. Actually, this fully opened position can be clearly identified based on the measure of the current supplied to the motor, this current rising strongly when this position is reached.

From this defined position, each of the specific intermediate positions of the downstream enclosing part 2 correspond to specific corresponding number of pulses or signals of the rotary encoder. These numbers are stored in an electronic memory of the control system. The correspondence of each specific intermediate positions with each number of pulses or signals is illustrated in Figure 10 :

| - fully opened position | initialisation |
|---|---|
| - home intermediate position | P1 |
| - pod holder release position | P2 |
| - recognition position | P3 |
| - americano position | P4 |
| - close position | P5 |

Usually, the process control unit of the beverage machine is configured to control the pump 33, the heater 32, and optionally the recognition device or the user interface or display if present.

Although the invention has been described with reference to the above illustrated embodiments, it will be appreciated that the invention as claimed is not limited in any way by these illustrated embodiments.

Variations and modifications may be made without departing from the scope of the invention as defined in the claims. Furthermore, where known equivalents exist to specific features, such equivalents are incorporated as if specifically referred in this specification.

As used in this specification, the words "comprises", "comprising", and similar words, are not to be interpreted in an exclusive or exhaustive sense. In other words, they are intended to mean "including, but not limited to".

### List of references in the drawings :

| | | | |
|---|---|---|---|
| downstream enclosing part | | | 1 |
| pod holder | | | 11 |
| | arms | | 11a, 11b |
| downstream plate piercing arrangement | | | 12 |
| spikes | | | 121 |
| | spring | | 132a, 132b |
| | peripheral area | | 134 |
| | pod holder locker | | 135a, 135b |
| | pin | | 136a, 136b |
| upstream enclosing part | | | 2 |
| | cage | | 21 |
| | upstream piercing arrangement | | 22 |
| | liquid injector | | 25 |
| | pod trigger | | 26a, 26b |
| | | indentation | 260a, 260b |
| | trigger for recognition | | 27 |
| | trigger for second peristaltic valve | | 28 |
| | protrusion | | 281a, 281b, 281c |
| | trigger for first peristaltic valve | | 29 |
| | | pin | 291 |
| | | end part | 292 |
| pod | | | 3 |
| body | | | 31 |
| | side wall | | 311 |
| | bottom wall | | 313 |
| lid | | | 32 |
| | | insertion section | 4 |
| | | extraction chamber | 5 |
| | | axis | 6 |
| | | fluid system | 7 |
| | | tank | 71 |
| | | pump | 72 |
| | | heater | 73 |
| | | first peristaltic valve | 741 |
| | | actuator | 7411 |
| | | pinching elements | 7412a, 7412b |
| | | second peristaltic valve | 742 |
| | | hot tube | 751 |
| | | cold tube | 752 |
| | | connector | 76 |
| | | first tube (to pod) | 771 |
| | | second tube (to dispensing area) | 772 |
| | | flowmeter | 78 |
| | | dispensing area | 8 |
| | | drinking cup | 81 |
| | | recognition device | 9 |
| | | motor | 10 |
| | | gear mechanism | 101 |
| | | encoder | 102 |
| | | actuator | 103 |
| | | shaft | 104 |
| | | control system | 20 |

## Claims

1. Beverage preparation machine for preparing a beverage from a beverage ingredient pod, said machine comprising :
- a device for extracting a beverage ingredient by supplying an extraction liquid, such as hot water, into the pod, said extraction device comprising :
. upstream and downstream pod enclosing parts (1, 2) relatively movable between an open position for inserting and/or ejecting the pod (3) and a closed position for forming an extraction chamber (5) enclosing the pod during extraction,
. the upstream part (2) defining a cage (21) and bearing :
. an upstream piercing arrangement (22) for opening a bottom wall (313) of the pod, and
. a liquid injector (25),
. the downstream part (1) comprising a downstream piercing arrangement (12) for opening a lid (32) of the pod and a beverage outlet for dispensing extracted beverage,
- a liquid supply system connected to the upstream enclosing part, said system comprising :
. a liquid supply (71),
. pumping means (72) to drive liquid from the liquid supply,
. heating means (73) to adapt the temperature of the liquid,
- a motor (10) to actuate the movement of at least one of the upstream and downstream pod enclosing parts (1, 2), preferably through the translation of the upstream enclosing part to the fixed downstream pod enclosing part, between the opened position and the closed position, and a control system (20) configured to control the actuation of said motor,
wherein the liquid supply system comprises :
- a cold tube (752) to supply cold pumped water from the pump and a hot tube (751) to supply pumped hot water from the heating means, said cold tube and said hot tube supplying a common connector (76) with water,
- a first peristaltic valve (741) to enable the supply of the common connector with water either from the cold tube or from the hot tube,
- a first tube (771) to supply water to the liquid injector (25) and a second tube (772) to supply water to an in-cup beverage dispensing area (8), the common connector supplying said first and said second tubes with water,
- a second peristaltic valve (742) to enable the supply of the first tube or the second tube with water dispensed through the common connector,
and wherein the machine comprises mechanical triggers attached to at least one of the movable pod enclosing parts, said triggers being designed and positioned so as to close or open water paths in the tubes (751, 752, 771, 772) and pod paths in the extraction device according to the movement of at least one of the upstream and downstream pod enclosing parts (1, 2) during the sequence of preparation of a beverage from the pod.

2. Beverage preparation machine according to Claim 1, wherein :
- the downstream pod enclosing part (1) is fixed, and
- the upstream pod enclosing part (2) is translatable along a longitudinal axis (XX') between a fully opened position and a closed position, and
- the control system of the motor is configured to position the upstream pod enclosing part (2) in at least one intermediate position between the fully open position and the closed position.

3. Beverage preparation machine according to Claim 1 or 2, wherein said machine comprises a pod trigger (26a, 26b) attached to the upstream pod enclosing part (2), said pod trigger being designed and positioned relatively to first and second enclosing parts :
- to receive and hold a pod above the pod enclosing parts when the upstream pod enclosing part (2) is positioned in a pod holding intermediate position,
- to release the pod when the upstream pod enclosing part (2) is positioned in the fully opened position.

4. Beverage preparation machine according to any one of the precedent claims,
wherein said machine comprises a recognition device (9) configured to recognise a pod by contact of said recognition device with a surface of the pod, and
wherein said machine comprises a trigger (27) for recognition attached to the upstream pod enclosing part (2), said trigger for recognition being designed and positioned to push the pod to the recognition device when the upstream pod enclosing part (2) is positioned in a pod recognition intermediate position.

5. Beverage preparation machine according to any one of the precedent claims, wherein said machine comprises a pod holder (11), said pod holder being attached to the downstream pod enclosing part (1) and said pod holder being movable between :
. a receiving position for receiving and holding a pod in front of the downstream plane piercing arrangement (12) when the pod is inserted, and
. a retracted position at the lateral sides of the downstream plane piercing arrangement (12) when the pod is ejected, and
wherein said machine comprises a trigger (260a, 260b) for the pod holder, said trigger for the pod holder being attached to the upstream pod enclosing part (2) and being designed and positioned to release the pod holder from the retracted position to the receiving position when the upstream pod enclosing part (2) is moved to a pod holder release intermediate position.

6. Beverage preparation machine according to any one of the precedent claims, wherein said machine comprises a trigger (28) for the second peristaltic valve, said trigger being attached to the upstream pod enclosing part (2) and said trigger being designed and positioned relatively to the second enclosing part and the second fist peristaltic valve :
- to open the first tube (771) to supply water to the liquid injector (25) when the upstream pod enclosing part (2) is positioned in the closed position,
- to open the second tube (772) to supply water to the in-cup beverage dispensing area (8) when the upstream pod enclosing part (2) is positioned in an americano intermediate position.

7. Beverage preparation machine according to the precedent claim, wherein the trigger (28) for the second peristaltic valve is designed so as to open the first tube (771) to supply water to the liquid injector (25) while the upstream pod enclosing part (2) is being moved from the first pod holding position to a downstream position.

8. Beverage preparation machine according to any one of the precedent claims, wherein :
- the first peristaltic valve (741) comprises an actuator (7411) movable between at least two positions, wherein, in one cold position of said actuator, water is supplied from the cold tube (752), and in another hot position of said actuator, water is supplied from the hot tube (751), and
- said machine comprises a trigger (29) for the actuator (1411) of the first peristaltic valve, said trigger being attached to the upstream pod enclosing part (2) and said trigger being designed and positioned relatively to the second enclosing part and to the actuator :
. to move said actuator to the hot position when the upstream pod enclosing part (2) is moving downstream from the fully opened position,
. to move said actuator to its cold position when the upstream pod enclosing part (2) is moving upstream from the home position to the fully opened position.

9. Beverage preparation machine according to any one of the precedent claims, wherein :
- the upstream pod enclosing part (2) is driven by the motor (10), preferably by way of a gear mechanism (101), and
- the machine comprises a rotary encoder (102) cooperating with the shaft (104) of the motor, and
- the control system controls the motor (10) dependent on the signals provided by the rotary encoder (102)

10. Beverage preparation machine according to precedent claim, wherein
- the rotary encoder (102) is initialized when the upstream enclosing part (2) reaches the fully opened position, and
- said fully opened position is detected by the measure of the current of the motor.

11. Beverage preparation machine according to any one of the precedent claim, wherein, at rest :
- the first peristaltic valve (741) is positioned so that the hot tube (751) is not pinched, and
- the second peristaltic valve (742) is positioned so that each of the first tube and the second tube are half-pinched.

## Patentansprüche

1. Getränkezubereitungsmaschine zum Zubereiten eines Getränks aus einer Getränkeinhaltsstoffkapsel, die Maschine umfassend:
- eine Vorrichtung zum Extrahieren eines Getränkeinhaltsstoffs durch Zuführen einer Extraktionsflüssigkeit, wie Heißwasser, in die Kapsel, die Extraktionsvorrichtung umfassend:
. einen stromaufwärts gelegenen und einen stromabwärts gelegenen kapselumschließenden Teil (1, 2), die zwischen einer offenen Position zum Einlegen und/oder Entfernen der Kapsel (3) und einer geschlossenen Position zum Ausbilden einer Extraktionskammer (5), der die Kapsel während einer Extraktion umschließt, relativ bewegbar sind,
. der stromaufwärts gelegene Teil (2), der einen Korb (21) und ein Lager definiert:
. eine stromaufwärts gelegene Durchstechanordnung (22) zum Öffnen einer Bodenwand (313) der Kapsel und . einem Flüssigkeitsinjektor (25),
. der stromabwärts gelegene Teil (1) umfassend eine stromabwärts gelegene Durchstechanordnung (12) zum Öffnen eines Deckels (32) der Kapsel und einen Getränkeauslass zum Ausgeben des extrahierten Getränks,
- ein Flüssigkeitszufuhrsystem, das mit dem stromaufwärts gelegenen umschließenden Teil verbunden ist, das System umfassend:
. eine Flüssigkeitszufuhr (71),
. Pumpmittel (72), um Flüssigkeit aus der Flüssigkeitszufuhr zu treiben,
. Erwärmungsmittel (73), um die Temperatur der Flüssigkeit anzupassen,
- ein Motor (10), um die Bewegung mindestens eines des stromaufwärts gelegenen und des stromabwärts gelegenen kapselumschließenden Teils (1, 2) anzutreiben, vorzugsweise durch die Verschiebung des stromabwärts gelegenen umschließenden Teils zu dem fixierten stromabwärts gelegenen kapselumschließenden Teil, zwischen der geöffneten Position und der geschlossenen Position, und ein Steuerungssystem (20), das konfiguriert ist, um die Betätigung des Motors zu steuern,
wobei das Flüssigkeitszufuhrsystem umfasst:
- ein Kaltrohr (752), um gepumptes Kaltwasser von der Pumpe zuzuführen und ein Heißrohr (751), um gepumptes Heißwasser von den Heizmitteln zuzuführen, wobei das Kaltrohr und das Heißrohr einem gemeinsamen Verbinder (76) Wasser zuführen,
- ein erstes Peristaltikventil (741), um die Wasserzufuhr des gemeinsamen Anschlusses entweder aus dem Kaltrohr oder aus dem Heißrohr zu ermöglichen,
- ein erstes Rohr (771), um dem Flüssigkeitsinjektor (25) Wasser zuzuführen, und ein zweites Rohr (772), um einem Getränkeabgabebereich (8) in einem Becher Wasser zuzuführen, wobei der gemeinsame Verbinder dem ersten und dem zweiten Rohr Wasser zuführt,
- ein zweites Peristaltikventil (742), um die Zufuhr von Wasser dem ersten Rohr oder dem zweiten Rohr zu ermöglichen, das über den gemeinsamen Anschluss abgegeben wird,
und wobei die Maschine mechanische Auslöser umfasst, die an mindestens einem der bewegbaren kapselumschließenden Teile angebracht sind, wobei die Auslöser konstruiert und positioniert sind, um die Wasserwege in den Rohren (751, 752, 771, 772) und die Kapselwege in der Extraktionsvorrichtung gemäß der Bewegung mindestens eines des stromaufwärts und stromabwärts gelegenen kapselumschließenden Teils (1, 2) während der Zubereitungssequenz eines Getränks aus der Kapsel zu schließen oder zu öffnen.

2. Getränkezubereitungsmaschine nach Anspruch 1, wobei:
- der stromabwärts gelegene kapselumschließende Teil (1) fixiert ist, und
- der stromabwärts gelegene kapselumschließende Teil (2) entlang einer Längsachse (XX') zwischen einer vollständig geöffneten Position und einer geschlossenen Position verschiebbar ist, und
- das Steuerungssystem des Motors konfiguriert ist, um den stromaufwärts gelegenen kapselumschließenden Teil (2) in mindestens einer Zwischenposition zwischen der vollständig geöffneten Position und der geschlossenen Position zu positionieren.

3. Getränkezubereitungsmaschine nach Anspruch 1 oder 2, wobei die Maschine einen Kapselauslöser (26a, 26b) umfasst, der an dem stromaufwärts gelegenen kapselumschließenden Teil (2) angebracht ist, wobei der Kapselauslöser relativ zu einem ersten und einem zweiten umschließenden Teil konstruiert und positioniert ist:
- um eine Kapsel oberhalb der kapselumschließenden Teile aufzunehmen und zu halten, wenn der stromaufwärts gelegene kapselumschließende Teil (2) in einer Kapselhaltezwischenposition positioniert ist,
- um die Kapsel freizugeben, wenn der stromaufwärts gelegene kapselumschließende Teil (2) in der vollständig geöffneten Position positioniert ist.

4. Getränkezubereitungsmaschine nach einem der vorstehenden Ansprüche, wobei die Maschine eine Erkennungsvorrichtung (9) umfasst, die konfiguriert ist, um eine Kapsel durch Kontakt der Erkennungsvorrichtung mit einer Oberfläche der Kapsel zu erkennen, und
wobei die Maschine einen Auslöser (27) für eine Erkennung umfasst, der an dem stromaufwärts gelegenen kapselumschließenden Teil (2) angebracht ist, wobei der Auslöser für die Erkennung konstruiert und positioniert ist, um die Kapsel zu der Erkennungsvorrichtung zu drücken, wenn der stromaufwärts gelegene kapselumschließende Teil (2) in einer Kapselerkennungszwischenposition positioniert ist.

5. Getränkezubereitungsmaschine nach einem der vorstehenden Ansprüche, wobei die Maschine einen Kapselhalter (11) umfasst, wobei der Kapselhalter an dem stromabwärts gelegenen kapselumschließenden Teil (1) angebracht ist und der Kapselhalter bewegbar ist zwischen:
. einer Aufnahmeposition zum Aufnehmen und Halten einer Kapsel vor der stromabwärts gelegenen Ebenendurchstechanordnung (12), wenn die Kapsel eingeführt wird, und
. einer zurückgezogenen Position an den lateralen Seiten der stromabwärts gelegenen Ebenendurchstechanordnung (12), wenn die Kapsel ausgeworfen wird, und
wobei die Maschine einen Auslöser (260a, 260b) für den Kapselhalter umfasst, der Auslöser für den Kapselhalter an dem stromaufwärts gelegenen kapselumschließenden Teil (2) angebracht ist und konstruiert und positioniert ist, um den Kapselhalter aus der zurückgezogenen Position in die Aufnahmeposition freizugeben, wenn der stromaufwärts gelegene kapselumschließende Teil (2) in eine Kapselhalterfreigabezwischenposition bewegt wird.

6. Getränkezubereitungsmaschine nach einem der vorstehenden Ansprüche, wobei die Maschine einen Auslöser (28) für das zweite Peristaltikventil umfasst, wobei der Auslöser an dem stromaufwärts gelegenen kapselumschließenden Teil (2) angebracht ist und der Auslöser relativ zu dem zweiten umschließenden Teil und dem zweiten Faustperistaltikventil konstruiert und positioniert ist:
- um das erste Rohr (771) zu öffnen, um dem Flüssigkeitsinjektor (25) Wasser zuzuführen, wenn das stromaufwärts gelegene kapselumschließende Teil (2) in der geschlossenen Position positioniert ist,
- um das zweite Rohr (772) zu öffnen, um dem Getränkeabgabebereich (8) in dem Becher Wasser zuzuführen, wenn der stromaufwärts gelegene kapselumschließende Teil (2) in einer Americano-Zwischenposition positioniert ist.

7. Getränkezubereitungsmaschine nach dem vorstehenden Anspruch, wobei der Auslöser (28) für das zweite Peristaltikventil konstruiert ist, um das erste Rohr (771) zu öffnen, um dem Flüssigkeitsinjektor (25) Wasser zuzuführen, während der stromaufwärts gelegene kapselumschließende Teil (2) von der ersten Kapselhalteposition in eine stromabwärts gelegene Position bewegt wird.

8. Getränkezubereitungsmaschine nach einem der vorstehenden Ansprüche, wobei:
- das erste Peristaltikventil (741) einen Aktuator (7411) umfasst, der zwischen mindestens zwei Positionen bewegbar ist, wobei, in einer Kaltposition des Aktuators, Wasser aus dem Kaltrohr (752) zugeführt wird, und in einer anderen Heißposition des Aktuators, Wasser aus dem Heißrohr (751) zugeführt wird, und
- die Maschine einen Auslöser (29) für den Aktor (1411) des ersten Peristaltikventils umfasst, wobei der Auslöser an dem stromaufwärts gelegenen kapselumschließende Teil (2) angebracht ist und relativ zu dem zweiten umschließenden Teil und zu dem Aktor konstruiert und positioniert ist:
. um den Aktuator in die Heißposition zu bewegen, wenn sich der stromaufwärts gelegene kapselumschließende Teil (2) von der vollständig geöffneten Position stromabwärts bewegt,
. um den Aktuator in seine Kaltposition zu bewegen, wenn sich der stromaufwärts gelegene kapselumschließende Teil (2) von der Ausgangsposition in die vollständig geöffnete Position bewegt.

9. Getränkezubereitungsmaschine nach einem der vorstehenden Ansprüche, wobei:
- der stromaufwärts gelegene kapselumschließende Teil (2) durch den Motor (10), vorzugsweise über einen Getriebemechanismus (101), angetrieben wird, und
- die Maschine einen Drehgeber (102) umfasst, der mit der Welle (104) des Motors zusammenwirkt, und
- das Steuerungssystem den Motor (10) abhängig von den Signalen steuert, die durch den Drehgeber (102) bereitgestellt werden.

10. Getränkezubereitungsmaschine nach dem vorstehenden Anspruch, wobei
- der Drehgeber (102) initialisiert wird, wenn der stromaufwärts gelegene kapselumschließende Teil (2) die vollständig geöffnete Position erreicht, und
- die vollständig geöffnete Position durch die Messung des Stroms des Motors erkannt wird.

11. Getränkezubereitungsmaschine nach einem der vorstehenden Ansprüche, wobei, in einem Ruhezustand:
- das erste Peristaltikventil (741) positioniert ist, sodass das Heißrohr (751) nicht eingeklemmt wird, und
- das zweite Peristaltikventil (742) positioniert ist, sodass jedes des ersten und des zweiten Rohrs halb abgeklemmt sind.

## Revendications

1. Machine de préparation de boissons permettant de préparer une boisson à partir d'une dosette d'ingrédient de boisson, ladite machine comprenant :
- un dispositif pour extraire un ingrédient de boisson en fournissant un liquide d'extraction, tel que de l'eau chaude, dans la dosette, ledit dispositif d'extraction comprenant :
. des parties d'enveloppement de dosette amont et aval (1, 2) relativement mobiles entre une position ouverte pour l'insertion et/ou l'éjection de la dosette (3) et une position fermée pour former une chambre d'extraction (5) enveloppant la dosette pendant l'extraction,
. la partie amont (2) définissant une cage (21) et portant :
. un agencement de perçage amont (22) pour ouvrir une paroi de fond (313) de la dosette, et un injecteur de liquide (25),
. la partie aval (1) comprend un agencement de perçage aval (12) pour ouvrir un couvercle (32) de la dosette et une sortie de boisson pour distribuer la boisson extraite,
- un système d'alimentation en liquide relié à la partie d'enveloppement amont, ledit système comprenant :
- une alimentation en liquide (71),
. un moyen de pompage (72) pour entraîner le liquide depuis l'alimentation en liquide,
. un moyen de chauffage (73) pour adapter la température du liquide,
- un moteur (10) pour actionner le mouvement d'au moins l'une des parties d'enveloppement de dosette amont et aval (1, 2), de préférence par la translation de la partie d'enveloppement amont vers la partie d'enveloppement aval fixe, entre la position ouverte et la position fermée, et un système de commande (20) configuré pour commander l'actionnement dudit moteur,
dans laquelle le système d'alimentation en liquide comprend :
- un tube froid (752) pour fournir de l'eau froide pompée depuis la pompe et un tube chaud (751) pour fournir de l'eau chaude pompée depuis le moyen de chauffage, ledit tube froid et ledit tube chaud alimentant en eau un raccord commun (76),
- une première vanne péristaltique (741) pour permettre l'alimentation en eau du raccord commun, soit depuis le tube froid, soit depuis le tube chaud,
- un premier tube (771) pour alimenter en eau l'injecteur de liquide (25) et un second tube (772) pour alimenter en eau une zone de distribution de boisson dans la tasse (8), le raccord commun alimentant en eau lesdits premier et second tubes,
- une seconde vanne péristaltique (742) pour permettre l'alimentation du premier tube ou du second tube avec de l'eau distribuée par le raccord commun,
et dans lequel la machine comprend des déclencheurs mécaniques fixés à au moins l'une des parties d'enveloppement de dosette mobiles, lesdits déclencheurs étant conçus et positionnés de manière à fermer ou ouvrir des chemins d'eau dans les tubes (751, 752, 771, 772) et des chemins de dosette dans le dispositif d'extraction en fonction du mouvement d'au moins l'une des parties d'enveloppement de dosette amont et aval (1, 2) pendant la séquence de préparation d'une boisson à partir de la dosette.

2. Machine de préparation de boissons selon la revendication 1, dans laquelle :
- la partie d'enveloppement de dosette aval (1) est fixe, et
- la partie d'enveloppement de dosette amont (2) est mobile en translation le long d'un axe longitudinal (XX') entre une position complètement ouverte et une position fermée, et
- le système de commande du moteur est configuré pour positionner la partie d'enveloppement de dosette amont (2) dans au moins une position intermédiaire entre une position complètement ouverte et une position fermée.

3. Machine de préparation de boissons selon la revendication 1 ou 2, dans laquelle ladite machine comprend un déclencheur de dosette (26a, 26b) fixé à la partie d'enveloppement de dosette amont (2), ledit déclencheur de dosette étant conçu et positionné par rapport aux première et seconde parties d'enfermement :
- pour recevoir et maintenir une dosette au-dessus des pièces d'enfermement de dosette lorsque la pièce d'enfermement de dosette amont (2) est positionnée dans une position intermédiaire de maintien de dosette,
- pour libérer la dosette lorsque la partie d'enveloppement de dosette amont (2) est dans la position complètement ouverte.

4. Machine de préparation de boissons selon l'une quelconque des revendications précédentes, dans laquelle ladite machine comprend un dispositif de reconnaissance (9) configuré pour reconnaître une dosette par contact dudit dispositif de reconnaissance avec une surface de la dosette, et
dans laquelle ladite machine comprend un déclencheur (27) pour la reconnaissance, fixé à la partie d'enveloppement de dosette amont (2), ledit déclencheur pour la reconnaissance étant conçu et positionné pour pousser la dosette vers le dispositif de reconnaissance lorsque la partie d'enveloppement de dosette amont (2) est positionnée dans une position intermédiaire de reconnaissance de dosette.

5. Machine de préparation de boissons selon l'une quelconque des revendications précédentes, dans laquelle ladite machine comprend un porte-dosette (11), ledit porte-dosette étant fixé à la partie d'enveloppement de dosette aval (1) et ledit porte-dosette étant mobile entre :
. une position de réception pour recevoir et maintenir une dosette en face de l'agencement de perçage de plan aval (12) lorsque la dosette est insérée, et
. une position rétractée au niveau des côtés latéraux de l'agencement de perçage de plan aval (12) lorsque la dosette est éjectée, et
dans laquelle ladite machine comprend un déclencheur (260a, 260b) pour le porte-dosette, ledit déclencheur pour le porte-dosette étant fixé à la partie d'enveloppement de dosette amont (2) et étant conçu et positionné pour libérer le porte-dosette de la position rétractée à la position de réception lorsque la partie d'enveloppement de dosette amont (2) est déplacée vers une position intermédiaire de libération de porte-dosette.

6. Machine de préparation de boissons selon l'une quelconque des revendications précédentes, dans laquelle ladite machine comprend un déclencheur (28) pour la seconde vanne péristaltique, ledit déclencheur étant fixé à la partie d'enveloppement de dosette amont (2) et ledit déclencheur étant conçu et positionné par rapport à la seconde partie de d'enveloppement et à la seconde vanne péristaltique :
- pour ouvrir le premier tube (771) pour alimenter en eau l'injecteur de liquide (25) lorsque la partie d'enveloppement de dosette amont (2) est positionnée dans la position fermée,
- pour ouvrir le second tube (772) pour alimenter en eau la zone de distribution de boisson dans la tasse (8) lorsque la partie d'enveloppement de dosette amont (2) est positionnée dans une position intermédiaire americano.

7. Machine de préparation de boissons selon la revendication précédente, dans laquelle le déclencheur (28) pour la seconde vanne péristaltique est conçu de manière à ouvrir le premier tube (771) pour alimenter en eau l'injecteur de liquide (25) pendant que la partie d'enveloppement de dosette amont (2) est déplacée de la première position de maintien de dosette vers une position aval.

8. Machine de préparation de boissons selon l'une quelconque des revendications précédentes, dans laquelle : - la première vanne péristaltique (741) comprend un actionneur (7411) mobile entre au moins deux positions, dans laquelle, dans une position froide dudit actionneur, l'eau est fournie depuis le tube froid (752), et dans une autre position chaude dudit actionneur, l'eau est fournie depuis le tube chaud (751), et
- ladite machine comprend un déclencheur (29) pour l'actionneur (1411) de la première vanne péristaltique, ledit déclencheur étant fixé à la partie d'enveloppement de dosette amont (2) et ledit déclencheur étant conçu et positionné par rapport à la seconde partie d'enveloppement et à l'actionneur :
. pour déplacer ledit actionneur vers la position chaude lorsque la partie d'enveloppement de dosette amont (2) se déplace vers l'aval depuis la position complètement ouverture,
. pour déplacer ledit actionneur vers sa position froide lorsque la partie d'enveloppement de dosette amont (2) se déplace vers l'amont depuis la position initiale vers la position complètement ouverte.

9. Machine de préparation de boissons selon l'une quelconque des revendications précédentes, dans laquelle : - la partie d'enveloppement de dosette amont (2) est entraînée par le moteur (10), de préférence au moyen d'un mécanisme à engrenages (101), et
- la machine comprend un codeur rotatif (102) coopérant avec l'arbre (104) du moteur, et
- le système de commande commande le moteur (10) en fonction des signaux fournis par le codeur rotatif (102)

10. Machine de préparation de boissons selon la revendication précédente, dans laquelle
- le codeur rotatif (102) est initialisé lorsque la partie d'enveloppement de dosette amont (2) atteint la position complètement ouverte, et
- ladite position complètement ouverte est détectée par la mesure du courant du moteur.

11. Machine de préparation de boissons selon l'une quelconque revendication précédente, dans laquelle, au repos :
- la première vanne péristaltique (741) est positionnée de sorte que le tube chaud (751) ne soit pas pincé, et
- la seconde vanne péristaltique (742) est positionnée de sorte que chacun des premier tube et second tube soit à moitié pincé.
